(19) **Europäisches Patentamt**
**European Patent Office**
**Office européen des brevets**

(11) **EP 1 668 859 B1**

(12) **EUROPEAN PATENT SPECIFICATION**

(45) Date of publication and mention
of the grant of the patent:
**14.04.2010 Bulletin 2010/15**

(51) Int Cl.:
***H04L 29/06*** *(2006.01)*

(21) Application number: **03818803.3**

(22) Date of filing: **30.09.2003**

(86) International application number:
**PCT/SE2003/001518**

(87) International publication number:
**WO 2005/032100 (07.04.2005 Gazette 2005/14)**

(54) **MEANS AND METHOD FOR GENERATING A UNIQUE USER'S IDENTITY FOR USE BETWEEN DIFFERENT DOMAINS**

MITTEL UND VERFAHREN ZUR ERZEUGUNG EINER EINDEUTIGEN BENUTZERIDENTITÄT ZUR VERWENDUNG ZWISCHEN VERSCHIEDENEN DOMÄNEN

MOYENS ET PROCEDE POUR LA GENERATION D'UNE IDENTITE UNIQUE D'UTILISATEUR POUR UTILISATION ENTRE DIFFERENTS DOMAINES

(84) Designated Contracting States:
**AT BE BG CH CY CZ DE DK EE ES FI FR GB GR HU IE IT LI LU MC NL PT RO SE SI SK TR**

(43) Date of publication of application:
**14.06.2006 Bulletin 2006/24**

(73) Proprietor: **TELEFONAKTIEBOLAGET LM ERICSSON (publ)**
**164 83 Stockholm (SE)**

(72) Inventors:
• **PARDO-BLAZQUEZ, Avelina**
**E-28012 Madrid (ES)**
• **CARRETERO-GOMEZ, Miguel**
**E-28760 Tres Cantos (ES)**

• **WALKER, John Michael**
**E-28045 Madrid (ES)**
• **MONJAS-LLORENTE, Miguel-Angel**
**E-28045 Madrid (ES)**
• **DE GREGORIO-RODRIGUEZ, Jesus-Angel**
**28660 Boadilla del Monte-Madrid (ES)**

(74) Representative: **Norin, Klas**
**Ericsson AB**
**Patent Unit Service Layer & Multimedia**
**Torhamnsgatan 21-23**
**164 80 Stockholm (SE)**

(56) References cited:
**WO-A-02/11474        WO-A-03/050743**
**WO-A-03/073783        GB-A- 2 372 175**
**US-A1- 2003 093 681    US-B1- 6 463 533**

EP 1 668 859 B1

## Description

## FIELD OF THE INVENTION

The present invention generally relates to the generation of unique user identities for identification of users between different domains, on permanent or temporary basis, that are opaque and cannot be understood by third parties. More particularly, the invention pertains to means and methods for handling a plurality of user identities that a user may have under different service providers, while reducing the number of user searching keys and required storage.

## BACKGROUND

Mobile operators have realised presently that they need to offer a wide and attractive range of services to their users in order to enable the takeoff of the mobile. Internet. In the beginning, the operators thought that they were able to develop, host, and offer all those services. This approach has proven inappropriate for the expected takeoff and mobile operators have changed their mind. Now, operators seek to provide access to attractive services independently of where these services are provided.

Services may be own, even if just on a small fraction, or provided by partner service providers hosting and developing services that are integrated within an operators' service offer, or provided by a so-called federation of service providers, namely service providers that have reached an agreement with operators in order to accept the authentication of users performed by said operators. To sum up, the variety of relationships between a mobile operator and a service provider is infinite.

Different scenarios may turn up from a scenario where mobile operators offer services on behalf of service providers to another scenario where service providers offer services on their own whilst having a sort of agreement with mobile operators. In all these possible scenarios, user's identity-related issues are a key aspect that has to be handled very carefully, especially, in respect of the privacy and data protection.

For instance, a so-called Identity Federation is a protocol used by the Liberty Alliance Project whereby user's identities given at two different domains are federated. In this context, the term "federated" may be understood as "linked", "coupled", "associated", etc. Thus, an identity Federation occurs between an Identity Provider (IDP), which is generally responsible for authenticating a user and maintaining user's identities and user's identifiers, and a Service Provider (SP) at which the user has an account. Generally.speaking, an Identity Provider (IDP) establishes a business relationship with a group of Service Providers (SP) for Identity Federation purposes, amongst others.

Both actors, namely the IDP and the SP, may refer to an end-user by using other respective identities such as handles, aliases, pseudonyms or references understood by both. However, the identity currently used between both actors to refer to said end-user is a new identity only understood by the involved parties, and unintelligible to any third actor. Thus, the user's real identity at either domain is never exchanged between them; instead an alias is used, where alias is a sort of pseudonym, handle, reference, penname, etc. and wherein each domain is able to map the alias into a user's local identity for identification purposes. In this respect, the term "identity" is understood in a broad sense to refer any identifier or indicator that my represent or address an entity or user. In other words, the Identity Provider (IDP) is arranged to map each user's alias into its identity at the IDP, and a similar behaviour applies to the Service Provider (SP). The advantage of using aliases, as described above, is that security and privacy threats are somewhat minimised when different domains need refer to an end-user, since a third party is not able to guess the real identity of the user from the alias used between the IDP and the SP.

The use of aliases as means to refer to an end-user while hiding their real identity might be required also in scenarios other than Liberty Alliance. For instance, the European Union has two directives, 97/66/CE and 95/46/CE, respectively concerning privacy in telecommunications and data protection.

As already commented above, different scenarios may turn up and, in particular, an Identity Provider (IDP) for a user may be a mobile operator wherein the user data are accessible. For instance, there might be one scenario where the operator includes services from other Service Providers in its portfolio. This scenario may represent the operator as a sort of Virtual Service Provider, since the operator virtually offers services. A subscription relationship is established between the operator, namely the Virtual Service Provider (hereinafter VSP), and its user. The operator, in order to offer services to said user, signs agreements with external service providers, so that they actually offer the services on behalf of the operator.

Regarding the way a service handles its users at a Service Provider, there are two basic situations: services with a user account and services without a user account, wherein the former has been introduced above and both, former and latter, are further exemplary commented.

On the one hand, an example of services with a user account might be a stock quotes alarm service, wherein a user receives a short message (generally known as Short Message Service and abbreviated as "SMS") every time Ericsson stocks reaches a stop loss. The service, offered by ACME Stock Alarms Inc. and subscribed through the user's mobile operator, needs to keep a user's account in order to keep user's preferences, for instance the name of the stock and the value of the stop loss. Besides, ACME Stock Alarms Inc. and the mobile operator both need to share a user's identity, namely an identity used by the user to access the service in order to customise it and, at the same time, an identity that ACME Stock Alarms Inc. uses to indicate the operator the destination of the short message.

A method conventionally followed comprises a first step wherein the service provider and the mobile operator reach an agreement. A usual agreement might include single Sign On (SSO) functionality by virtue of which a user does not have to authenticate towards the service; instead, the operator handles the authentication and let the user access transparently to the service and to some operator's capabilities, such as accessing to messaging capabilities.

In a second step of this method the user subscribes a service from the operator's portfolio, which in the present example might be the Stock Quotes Alarm service provided by ACME Stock Alarms Inc.

In a third step of this method the operator, particularly acting as an Identity Provider, generates a user's identity and delivers it to the service. This identity shall be opaque and used by the service to create its own user account. There is currently no standard procedure for provisioning a user from an operator to a service hosted by an external service provider. Only Liberty Alliance has standardized the above Identity Federation mechanism to link pre-existent user accounts between a Service Provider (SP) and an Identity Provider (IDP), the latter being the operator in particular, though this mechanism is not applicable here since no previous account at the service is available.

In a fourth step of this method and for the example above, the user accesses the service to personalise the service settings and preferences by means of a WAP browser, for instance. The operator may provide some kind of SSO functionality so that the user does not have to authenticate towards the exemplary Stock Quotes Alarm service. Instead, the operator handles the authentication and delivers the previously agreed identity to the service.

In further steps of this method, once the service is customised, the service can make use of said user's identity to access the operator's domain, for instance, to access the messaging system in order to send an SMS. The operator will then have to find out the identity of the user at the internal enabler, a Short Message Service Centre (SMSC) in the present example, from the given user's identity shared by the operator and the service provider. This information is typically stored in an operator's user directory, so that the operator uses the given user's identity as the argument to perform a search operation in said user directory.

This leads to a huge amount of identities to be used as arguments for search operations per each user, given that different user's identities are used per service provider, and even per service at a service provider.

On the other hand, an example of service without a user account might be a download service for ring melodies, wherein a user sends an SMS to an ACME Hard Downloads service requesting the download of a specific ring melody. Once the request has been processed, the service sends another SMS to the user. Other possibility could be that the user accesses the service by means of a WAP phone through an operator's main page, and requests such ring melody. In any of these examples, no previous subscription to the service is needed. However, the operator has to deliver a user's identity to the service in order to let it send back a logo through operator's messaging capabilities.

A method conventionally followed to offer services without a user account comprises a first step wherein a service provider and a mobile operator reach an agreement. A usual agreement includes functionality for delivery of a user's identity, that is, the user does not have to provide any identity to the service; instead, the operator let the user access transparently to the service while providing an individual identity to the service provider. The agreement generally includes access to some operator's capabilities, which in the above example might be an access to messaging capabilities.

In a second step of this method the operator advertises the service so that users are aware of it.

Then, in a third step of this method and for the above example, the user accesses the service, either via SMS or WAP, and requests a specific melody.

In a fourth step of this method the operator creates a temporary user's identity and delivers it to the service. This temporary user's identity may be a subscriber directory number as the one generally known as an A-number or subscriber directory number. This temporary user's identity is opaque and just used by the service to send back the contents requested by the user.

Once the user's request has been processed, there is a further step wherein the service makes use of the temporary user's identity to access the operator's domain, that is, to access the messaging system in order to send an SMS and to complete the download.

Presently, and generally speaking, there is a number of challenges aiming the present invention to overcome the mostly common and some particular drawbacks from these two approaches.

A first drawback to deal with is that a single operator's user typically has a large number of identities at both network operator and service providers, and in most of the cases a user has an identity per each subscribed service. In this respect, temporary and permanent user's identities in each service namespace have to be unique in order to let each service have a key to create accounts. Moreover, two different users cannot have the same identity, either temporary or permanent, for the same or different services in order to let the operator connect the identity to the actual user it belongs to. Furthermore, identities for a same user must be different in order to prevent external service providers to create some kind of user profile by linking data from different services. Thus, there is a huge number of user's identities and identifiers to be stored in a user directory accessible to the network operator acting as Identity Provider. As the number of subscribers grow and the use of services increases, the huge number of user's identities and identifiers to be stored in a user directory becomes a problem for the operators in this sort of scenarios.

A second drawback is that, currently, some knowledge about the actual end-user's identity in the real world can be extracted from the user's identity in the telecommunication world. For example, the International Publication WO 03/050743 shows how an alias is generated in an entity of the Identity Provider, from a user identity and a service identifier, and submitted to a Content Provider where the user identity is extracted. In this respect, both temporary and permanent users' identities have to be opaque for the services. This feature is usually due to regulatory and privacy constraints. Thereby, the handling of user's identities by the operators requires a large number of indices, what introduces big performance penalties and is also a problem addressed by the present invention. Even if a unique alias is used between the Identity Provider (IDP) and the Service Provider (SP), as the alias is the sole identity referring to an end-user in all communications between two actors such as service providers and identity providers, the alias can be considered a primary key for searching in their respective databases for said user's profile. For example, the publication US 2003/0093681 shows how an authorization token is generated, also from a user identity and a service identifier, and said token further compared with a token stored in a directory system, the authorization token being used as the search key in said directory. Administration and storage of aliases or pseudonyms in databases at each actor, especially at the identity provider, which in particular might be an operator, would be difficult once the number of aliases per user increases above a certain threshold value. This fact also has a negative impact on the performance of database operations, especially search or lookup operations.

On the other hand, another challenge of the invention is the protection of users from malicious Service Providers that create services delivering contents to the users without having been requested. As these services are usually premium ones, this misbehaviour let those Service Providers get revenues for non-requested contents. As a consequence, further challenges turn up over the ones mentioned above in respect of handling the user's identity management and services without a user account.

A first additional challenge is that a service should not be able to "guess" valid temporal identities in order to prevent malicious services from delivering contents, which had not been requested, by using a "guessed" temporal identity. Another additional challenge is that a temporary identity must have a limited lifetime in order to prevent malicious services from delivering contents that had not been requested by using an old temporary identity. A further additional challenge is the provision of a simpler method to verify whether a temporary identity is still valid. Moreover, these challenges must be accomplished in a manner that the impacts on the operator's database systems are minimised.

## SUMMARY OF THE INVENTION

Thereby, an important object of the present invention is the provision of means and methods according to the appended claims to overcome and fit the above drawbacks and challenges respectively.

It is a further object of the present invention to achieve a suitable solution that still minimizes the impacts on the operator's user directory systems.

The above objects, among other things, are accomplished in accordance with the invention by the provision of means and method for generating a user's service indicator for a user to access a number of services offered by a service provider through a network operator where user data for the user are accessible.

Therefore, these means are provided in a specific device, which is called Identity Generator device in this specification, arranged for generating a user's service indicator, this user's service indicator being usable between the service provider domain and the identity provider domain, the latter being in particular a network operator domain, in order to unambiguously identify the user at each respective domain.

The Identity Generator device, in accordance with the invention, comprises:

- means for obtaining a master user's identifier usable to identify the user at the operator's network;

- means for obtaining a service identifier, indicative of services to be accessed at the service provider; and

- means for constructing a user's service indicator that includes the master user's identifier and the service identifier.

In particular, the above master user's identifier might be built up as function of a real user identity.

This Identity Generator device may be preferably adapted in such manner that the service identifier, which is indicative of services to be accessed at the service provider, comprises at least one element selected from: a service provider indicator, and a number of service indicators.

Moreover, this Identity Generator device may further comprise:

- means for obtaining at least one element selected from: network operator identifier, auxiliary value, expiry time, and integrity code; and

- means for including the at least one element into the user's service indicator.

The Identity Generator device may further comprise means for carrying out a reverse identity generation to obtain the master user's identifier from the user's service indicator, though this means for carrying out a reverse identity generation might as well reside in another entity such as a Border Gateway placed at the border of the operator domain for verification purposes, amongst others.

This Identity Generator device may advantageously comprise means for carrying out a symmetric cipher of the user's service indicator using a ciphering key. In this respect, different advantages further explained might be obtained by having a unique ciphering key for all the applicable service providers, or a different ciphering key per each service provider. In the case of having a different ciphering key per each service provider, the Identity Generator device, or rather the means for carrying out a reverse identity generation, also comprises means for determining the service provider having issued a communication based on a given user's service indicator, so that the appropriate ciphering key is used.

The Identity Generator device, in accordance with the invention, can be integrated in, or in close co-operation with, an entity of an identity provider network. In particular, this identity provider network may be an operator's network where the user data are accessible, or the user's home network.

In this respect, the Identity Generator device may be integrated in, or in close co-operation with, a Central Provisioning Entity responsible for provisioning tasks in the operator's network, or a user Directory System storing user data, or a Border Gateway placed at the border of the operator domain. Also in particular, this Border Gateway may be an entity selected from: an HTTP Proxy, a WAP Gateway, and a Messaging Gateway.

Complementarily to the Identity Generator device, there is provided a Decomposer component having the above means for carrying out a reverse identity generation, the Decomposer component arranged for integration in, or co-operation with, at least one entity selected from: the Identity Generator device, and other entities at the identity provider domain or at the service provider domain. In particular, on of these other entities might be a Border Gateway selected from: an HTTP Proxy, a WAP Gateway, and a Messaging Gateway.

In this respect, provided that a basic structure without encryption was used to generate a given user's service indicator, and that the Decomposer component is not aware of this structure, the means for carrying out a reverse generation in this Decomposer component includes means for obtaining the service identifier used to generate said given user's service indicator.

Provided that other identifiers, auxiliary values, or ciphering mechanism had been used to generate a given user's service indicator, the means for carrying out a reverse generation in this Decomposer component may further include means for obtaining at least one element selected from: network operator identifier, and ciphering key used to generate the given user's service indicator.

In addition, and preferably for verification of a given temporary user's service indicator, the means for carrying out a reverse generation at this Decomposer component may further include:

- means for obtaining applicable expiry time criteria; and

- means for verifying the validity of a given temporary user's service indicator (T-USI) against said expiry time criteria.

More generally speaking, the Decomposer component further comprises means for verifying the validity of a given user's service indicator, temporary or not, by making use of the master user's identifier as a search key towards a user directory system.

A method is also proposed by the present invention for generating a user's service indicator that is intended for a user to access a number of services offered by a service provider through a network operator where user data for the user are accessible, this user's service indicator being usable between the service provider domain and an identity provider domain, the latter being in particular a network operator domain, to unambiguously identify the user at each respective domain.

The method, in accordance with the invention, comprises:

- a step of obtaining a master user's identifier usable to identify the user at the operator's network;

- a step of obtaining a service identifier, which is indicative of services to be accessed at the service provider; and

- a step of constructing a user's service indicator that includes the master user's identifier and the service identifier.

In particular, the step of obtaining a master user's identifier may include a step of applying a function to a real user identity in order to hide said real user identity.

The method may be preferably adapted in such manner that the step of obtaining a service identifier may include a step of obtaining at least one element selected from: a service provider indicator, and a number of service indicators.

The method may also preferably comprise:

- a step of obtaining at least one element selected from: network operator identifier, auxiliary value, expiry time, and integrity code; and

- a step of including the at least one element into the user's service indicator.

The method may further comprise a step of carrying out a reverse generation to obtain the master user's identifier from the user's service indicator.

The method may advantageously comprise a step of carrying out a symmetric cipher of the user's service indicator using a ciphering key. The ciphering key may be unique for all the applicable service providers, or be different per each service provider. In the case of having a different ciphering key per each service provider, the method also comprises a step of determining the service provider having issued a communication based on a given user's service indicator, so that the appropriate ciphering key is used.

## BRIEF DESCRIPTION OF DRAWINGS

The features, objects and advantages of the invention will become apparent by reading this description in conjunction with the accompanying drawings, in which:

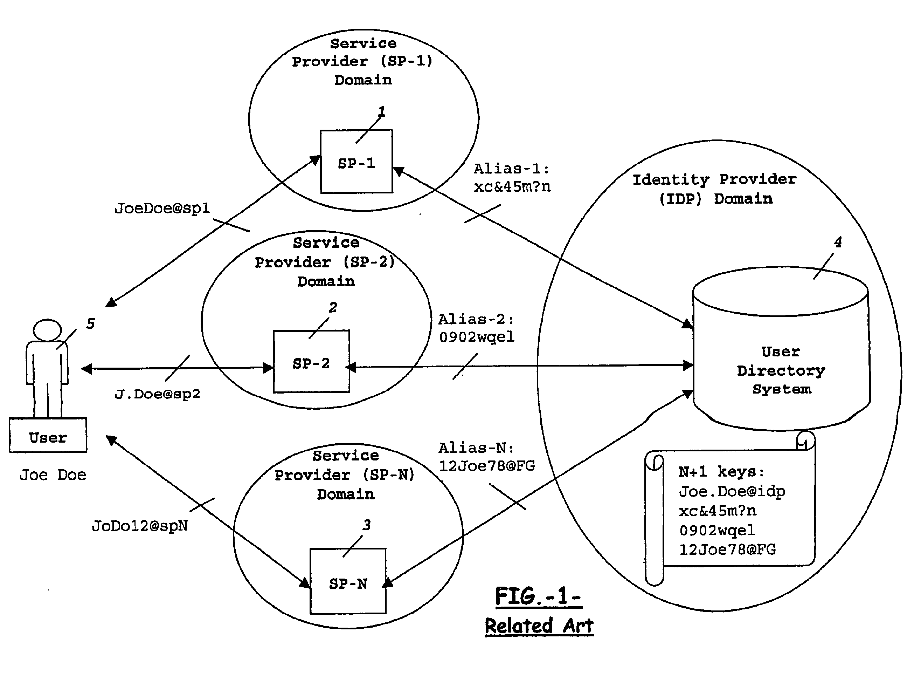

**FIG. 1** basically represents a scenario where a user get access through a network operator to services offered at different service providers, the user being identified by a specific user's identity at each service provider, and the operator's network holding a particular user's searching key per each service provider at its user directory system, in addition to the one or several user's identity at the operator's network.

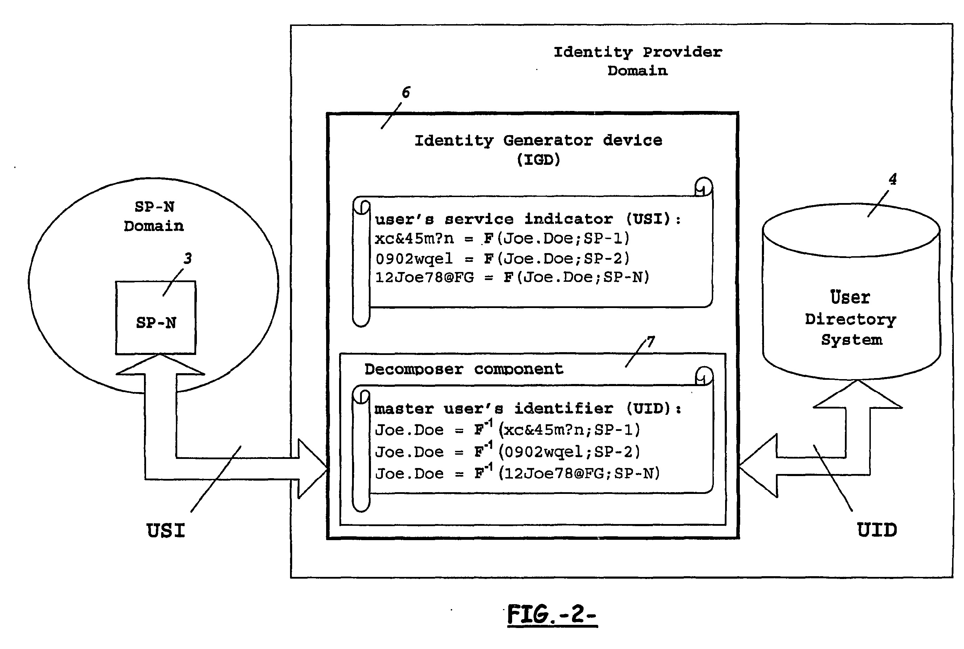

**FIG. 2** shows a simplified view of an Identity Generator device arranged for a direct generation of a user's service indicator as a function of a master user's identifier and a particular service provider, as well as for a reverse generation of a master user's identifier as a reverse function of the user's service indicator and the particular service provider.

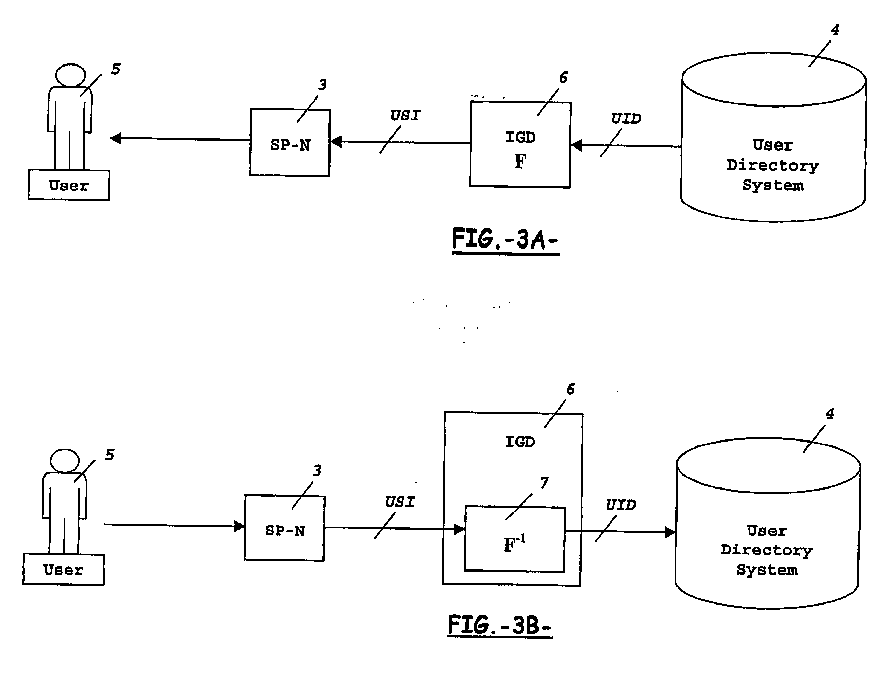

**FIG. 3A** and **FIG. 3B** show the basic actors in a scenario wherein the present invention applies; Fig. 3A illustrating the provision of a user's alias identity from the Identity Provider to the Service Provider, and Fig. 3B illustrating the use of said user's alias identity from the Service Provider to the Identity Provider.

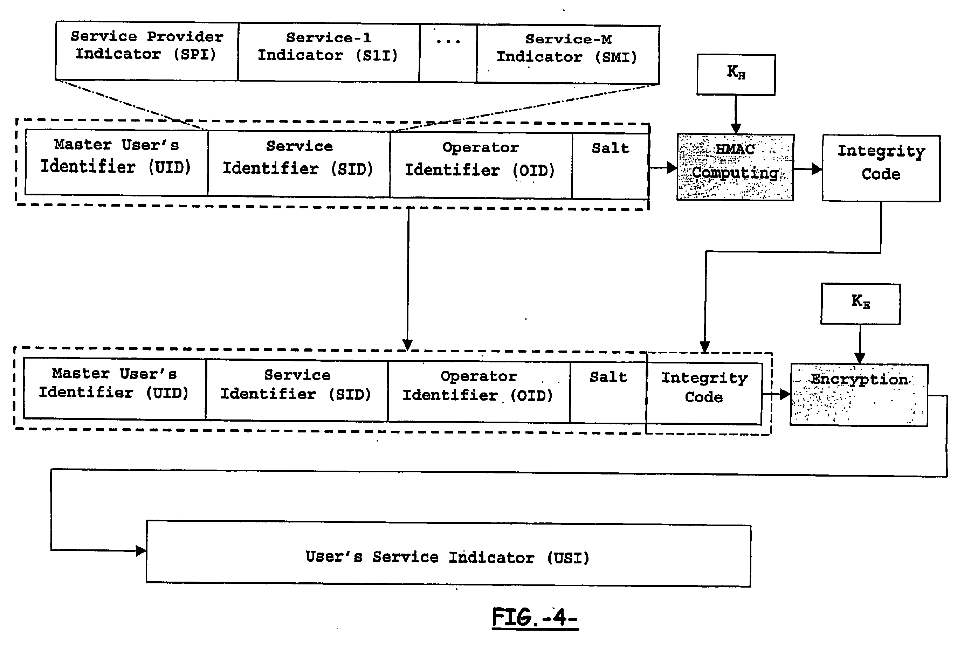

**FIG. 4** shows an exemplary generation of a user's service indicator for a user to access a number of services offered by a service provider through a network operator, in accordance with an embodiment of the invention.

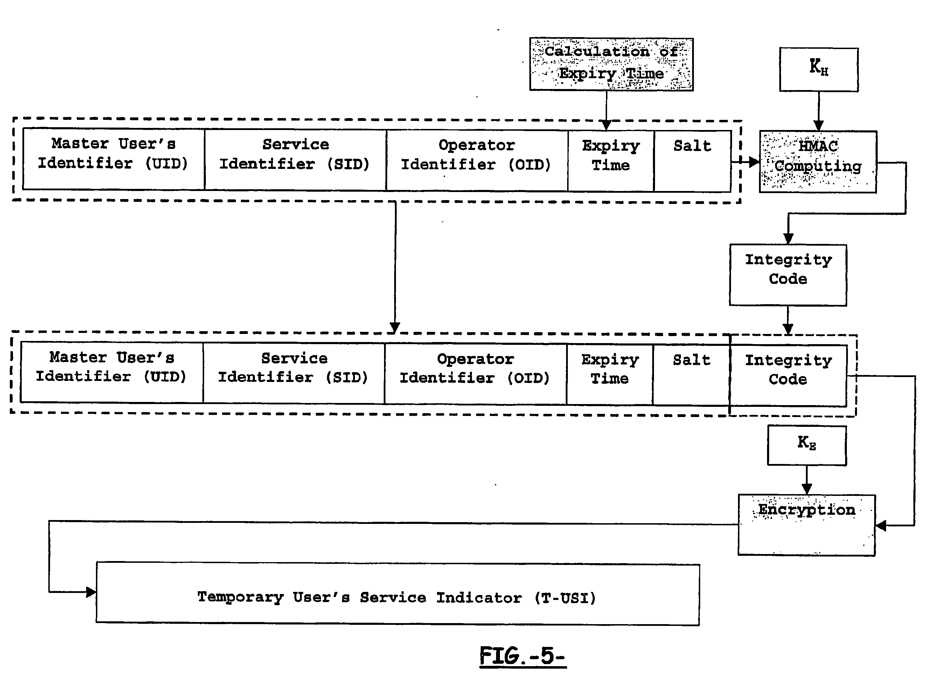

**FIG. 5** illustrates an exemplary generation of a user's Temporary service indicator for a user to temporary access a number of services offered by a service provider through a network operator, in accordance with another embodiment of the invention.

## DETAILED DESCRIPTION OF PREFERRED EMBODIMENTS

The following describes currently preferred embodiments of means, and methods for a user (5) to access a number of services offered by a service provider (SP-1; SP-2; SP-N) through an identity provider (IDP) with a unique user's alias (Alias-1; Alias-2; Alias-N) shared by the service provider and the identity provider. In particular, the identity provider is a network operator where the user data (4) are accessible, as illustrated in Fig. 1.

In accordance with a first aspect of the invention, there is provided an Identity Generator device (6) illustrated in Fig.2 and arranged to generate a same alias (12Joe78@FG) for the user (5) per service provider (3) during communication between two domains such as the case of a service provider (SP-N) and an identity provider (IDP). This alias is named user's service indicator (USI) in the instant specification.

Therefore, in a first embodiment of the present invention illustrated in Fig. 2 and Fig. 3A, this user's service indicator (USI) is generated as a function (F) of a master user's identifier (UID) (Joe.Doe) at the identity provider, and a service provider (SP-N) indicator (SPI).

Generally speaking, an explicit user's identity should not be used in the user's alias generation to avoid that the service provider might deduct or make use of such explicit user's identity. Hence, the user is assigned a master user's identifier (UID) at the identity provider that is opaque and cannot be understood by third parties, the identity provider being in particular a network operator.

The user's service indicator (USI) is a shared key to identify the user at both service provider and operator's network. Upon reception of any communication at an entity of the network operator from the service provider based on said user's service indicator (USI) (12Joe78@FG), this entity (7) of network operator is enabled to carry out a reverse generation ($F^{-1}$) to obtain the corresponding master user's identifier (UID) (Joe.Doe) as Fig. 3B along with Fig. 2 illustrate.

Therefore, in accordance with an advantageous embodiment, a generation (F) function makes use of a symmetric cipher and a ciphering key ($K_E$) further shown in Fig. 4 and Fig. 5. In this respect, there are two possibilities to generate and use the ciphering key ($K_E$): the key is unique in the whole system and used to encrypt all identities for all the service providers, or the key is different per service provider.

From a security point of view, it is better to use different keys, one for each service provider, because the reuse of the same key very often can lead to potential attacks. This implies, however, that in every request from a service provider using an alias, the identity of the service provider is made always known. Otherwise, if the identity of the service provider is not known in all the requests, a unique key may be used for the whole system, or a default key is used for those unknown service providers. To this end, the ciphering key ($K_E$) used to generate the user's service indicator (USI) at the Identity Generator device (6) during the process presented in Fig. 3A is also available during the process illustrated in Fig. 3B where a reverse generation ($F^{-1}$) takes place to obtain the corresponding master user's identifier (UID). This is one of the reasons why the reverse generation ($F^{-1}$) feature (7) is preferably placed in the Identity Generator device (6) as shown if Fig. 3B, though said reverse generation ($F^{-1}$) feature (7) might as well be placed in, or in co-operation with, another network entity such as a Border Gateway, not illustrated in any drawing, acting as entry point for service providers to the operator's domain and generally placed at the border of the operator domain.

In an advantageous embodiment of the present invention, the above master user's identifier (UID) may be derived from an explicit user's identity, in order to add additional entropy to the generation function (F). For example, the master user's identifier (UID) could be a one way hash value (SHA-1) of a real user identity such as the Mobile Station ISDN Number (MSISDN):

$$\texttt{Seed = SHA-1 (MSISDN);}$$

The result may produce a 160 bits output that can be used to derive a master user's identifier truncated to a desired number of bits:

$$\texttt{UID = First\_64\_bits (Seed);}$$

The exemplary use of a 64-bit code for the master user's identifier (UID) is actually a compromise between enough address space for identities, and not too much size for storage, since this master user's identifier (UID) is stored as one of the identities of the user and can be used as a search key in a user directory (4) accessible to the operator's network. That is, the identity provider (IDP), which in particular may be a network operator, uses this master user's identifier as a search key when performing any lookup for the user in the user directory system.

Thus, the Identity Generator device is preferably provided according to an embodiment of the invention with a Decomposer component (7) having the means to carry out a reverse generation ($F^{-1}$) from the user's service indicator (USI) to obtain the corresponding master user's identifier (UID) :

$$\texttt{UID + SPI = F}^{-1} \texttt{ (USI, key)}$$

In accordance with another embodiment of the invention, this Decomposer component (7) is separable from the Identity Generator device (6) for being integrated in, or used in co-operation with, other entities at the identity provider (IDP) domain or at the service provider (SP) domain. Therefore, the Decomposer component (7) is provided with means for obtaining the same or corresponding ciphering key ($K_E$) per service provider or per service application as the one used to generate a user's service indicator at the Identity Generator device. Nevertheless, when the Decomposer component (7) is integrated in the Identity Generator device (6), they both may share the means for obtaining a ciphering key ($K_E$).

In accordance with a second aspect of the present invention, there is provided an Identity Generator device (6) arranged to generate a user's service indicator (USI) following a structured pattern that includes a permanent user alias, such as the above master user's identifier, an indicator of the services to be accessed at a service provider, and possibly a number of additional fields to fit additional requirements and guarantee the strength and security of the solution.

Thus, in a currently preferred embodiment of the present invention, there is provided an Identity Generator device (6) arranged to generate a permanent or temporary user's service indicator (USI) as those exemplary illustrated in Fig. 4 and Fig. 5 respectively.

Fig. 4 shows a structured pattern followed to build up a user's service indicator (USI) to be shared by a service provider (SP-1; SP-2; SP-N) domain and an Identity Provider (IDP) domain, and intended to identify the user in both said domains.

The structured pattern in Fig. 4 comprises a master user's identifier (UID), which is a permanent user alias so to say, and that may be an already existing user's identity such as the International Mobile Subscriber Identity (IMSI), or a Mobile Station ISDN Number (MSISDN), or a token created ad hoc, in particular a value from a one way hash function like in the first above embodiment, and preferably arranged to be used as an indexed identity to search user's profile data.

The structured pattern in Fig. 4 also comprises a service identifier (SID), indicative of services to be accessed at the service provider by the user. This service identifier (SID), as illustrated in Fig. 4, may just include a service provider indicator (SPI) as suggested in the first above embodiment, or may include a number of individual service indicators (S1I; SNI), or combinations thereof (SPI, S1I, SNI). That is, in this preferred second embodiment, a basic structured pattern to generate a user's service indicator comprises a master user's identifier and a service identifier, the former arranged to search user's profile data in the identity provider domain, and the latter including information indicative of services to be accessed at the service provider by the user.

For example, the service identifier (SID) may include a service provider indicator (SPI) alone to indicate that any service at the service provider can be accessed, or may include a service provider indicator (SPI) followed by a list of generic service indicators that, being applicable to a plurality a service providers, can be accessed at the given service provider. Also for example, the service identifier (SID) may only include a list of specific service indicators that, being just applicable to a given service provider, can be just accessed at the given service provider.

Moreover, the presence or non-presence of a service provider indicator (SPI) may depend on the way that external service providers access to the operator domain. Provided that the service provider is the entity that authenticates the operator's domain and access to its capabilities, the service identifier (SID) might preferably include the service provider indicator (SPI). However, provided that a service itself, or a service application, is the entity authenticating and directly accessing to the operator's capabilities, a service provider indicator (SPI) might not be needed whereas a number of service indicators (S1I; SNI) representing individual services, or service applications, might be more appropriate.

On the other hand, the present invention provides an additional benefit for access to user directory systems not having an access control feature based on the client that accesses said user directory system, such as the case may be in relational databases. Thus, the proposed solution makes it possible to include an indication of an entity (SID) for which the user's service indicator (USI) is generated.

A basic structured pattern as the above described comprising a master user's identifier (UID) and a service identifier (SID) may be considered the simplest user's service indicator (USI) in accordance with some embodiments of the invention.

Apart from the above master user's identifier (UID), which identifies the user at the identity provider domain, and the above service identifier (SID), which is indicative of services to be accessed by the user at the service provider, the structured pattern illustrated in Fig. 4 to build up a user's service indicator (USI) might advantageously include an operator identifier (OID). A possible advantage of including said operator identifier turns up in scenarios where there is a sort of federation or association of network operators in such a manner that a first network operator acts as identity provider and thus generates a user's service indicator (USI) whereas a second network operator is involved in the verification of any request from a given service provider based on said user's service indicator (USI) generated for said given service provider. In this context, the second network operator might need to reverse the received user's service indicator (USI) to obtain the master user's identifier (UID) identifying the user and the operator identifier (OID) indicating where such user's service indicator (USI) was generated.

For this and other purposes, there may be a Central Provisioning Entity (CPE) arranged with means to provide appropriate operator identifier (OID) codes, service identifier (SID) codes, and available ciphering key $(K_E)$ values towards the Identity Generator device (6) and towards those other entities, such as Border Gateways, wherein a Decomposer component (7) may be integrated, or co-operating with, the Decomposer component (7) being in charge of applying a corresponding reverse generation $(F^{-1})$ function. More precisely, the Central Provisioning Entity (CPE) is arranged with means to provide operator identifier (OID) codes, service identifier (SID) codes, and available ciphering key $(K_E)$ values towards the Identity Generator device (6) and towards the Decomposer component (7) when the latter is, or resides in, a different entity than the Identity Generator device (6).

For these and other purposes, the Decomposer component (7) is provided with means for obtaining same or corresponding operator identifier (OID) codes, service identifier (SID) codes, and available ciphering key $(K_E)$ values as the ones used to generate the available user's service indicators (USI). That is, if no ciphering mechanism took place, there is no need for such ciphering key $(K_E)$.

Moreover, a user's service indicator (USI) might as well include an auxiliary generated value (Salt), as shown in Fig. 4 and Fig. 5, to allow the regeneration of identifiers that a user's service indicator (USI) might consist of, as well as to increase the entropy of the structure.

Further, and irrespective of whether the structured pattern comprises only basic fields such as master user's identifier (UID) and service identifier (SID), or also additional fields such as operator identifier (OID) and auxiliary values (Salt), an integrity code is computed as a function of this structured pattern and a certain key $(K_H)$, by following construction rules of a Hashed Message Authentication Code (generally known as HMAC), for example. Then, this integrity code is appended to the structured pattern, and the resulting new structure is preferably encrypted with a symmetric algorithm along with an encryption key $(K_E)$.

This new encrypted structure being considered an appropriate user's service indicator (USI), as illustrated in Fig. 4, for use in a wide range of entities and in different possible scenarios.

Apart from this sort of permanent user's identity, so to say, used for services with a user account introduced as background of the present invention, as the user's service indicator (USI) may be considered, the Identity Generator device (6) is also arranged to generate a temporary user's identity for services without a user account, which were also introduced in the background section.

In this respect, a temporary user's identity might be generated by simply adding an expiry time field to the structured pattern being used to build up a user's service indicator and shown in Fig. 4, the thus resulting new structure being considered a temporary user's service indicator (T-USI).

For example, Fig. 5 shows the construction of a temporary user's service indicator (T-USI) just differing from the user's service indicator (USI) shown in Fig. 4 on that the former includes an expiry time field. In a preferred embodiment like the one in Fig. 5, this expiry time field is included before computing the integrity code commented above, however, in other possible embodiments not shown in any drawing, the expiry time could be included further to facilitate the selection of an appropriate auxiliary generated value (salt) and reverse generation func-

tion (F$^{-1}$) to allow the regeneration of identifiers. Nevertheless, its inclusion in the structured pattern before being encrypted is preferable from a security point of view, and in order to prevent any tampering.

In respect of expiry time calculations, different criteria may be taken into account on a per user and service basis. For instance, an applicable criterion might be the type of Service Level Agreement (generally known as SLA) established between the operator and the service provider for a specific service. Another applicable criterion might be the connection status of the user, wherein different expiry times may be established depending on whether the user is on or off line. A further applicable criterion might be the type of authentication performed for a user in an on line mode. A still further applicable criterion might be any other suitable policy decided by the operator.

From a use perspective, the Identity Generator device (IGD) (6) described hereinbefore is suitable for generating permanent and temporary user's identities, on a per service provider, on a per identity provider basis, and combinations thereof. This Identity Generator device (IGD), which might be implemented as a standalone entity or integrated in another domain entity, is suitable for use in an Identity Provider (IDP) domain to effectively reduce the needs for storage of huge amounts of user's search keys in said domain, thus accomplishing one object of the present invention.

For instance, the Identity Generator device (6) might be integrated with a Central Provisioning Entity (CPE) responsible for provisioning tasks in the identity provider domain, in particular the operator's network, in order to update a user directory system (4) and other enablers. Nevertheless, the Identity Generator device (6) might be integrated with the user directory system instead.

On the other hand, the Identity Generator device (6), or at least the Decomposer component (7) having the means (F$^{-1}$) for carrying out a reverse generation of the different identifiers included in a given user's service indicator (USI), might as well be integrated in a so-called Identity-based Proxy acting as a border gateway that is the only entry point for all those identity-based operations towards the user directory system (4). In this respect, this so-called Identity-based Proxy acting as a border gateway is preferably responsible for verifying a returned temporary user's service indicator (T-USI) for different purposes such as charging for an offered service.

This verification requires means (F$^{-1}$) for carrying out a reverse generation of the different identifiers that the user's service indicator (USI) includes and, thereby, the Identity Generator device (6), or rather the Decomposer component (7), integrated in or in co-operation with the so-called Identity-based Proxy, is preferably the entity responsible for this task. Therefore, the means for carrying out a reverse generation at this Decomposer component (7) preferably includes: means for obtaining applicable expiry time criteria; and means for verifying the validity of a given temporary user's service indicator (T-USI) against said expiry time criteria.

Moreover, this solution would somehow transfer a similar drawback to the service provider domains. In this respect, and in accordance with another aspect of the present invention, the Identity Generator device (6) is also suitable for use in a Service Provider (SP-1; SP-2; SP-N) domain to effectively reduce the needs for storage of huge amounts of user's search keys in said domain. Therefore, the service provider might create a structured pattern containing an own indexed identity and a sort of operator indicator, and likely other auxiliary indicators. The final shared identity to be exchanged between both Service Provider and Identity provider being a still new structure comprising the above user's service indicator (USI) generated at the identity provider and the structured pattern generated at the service provider without further encryption.

Applicant's invention is described above in connection with various embodiments that are intended to be illustrative and non-restrictive. It is expected that those of ordinary skill in this art may modify these embodiments. The scope of Applicant's invention is defined by the claims in conjunction with the description and drawings, and all modifications that fall within the scope of these claims are intended to be included therein.

**Claims**

1. An Identity Generator device (6) arranged for generating a user's service indicator (USI) for a user to access a number of services offered by a service provider through a network operator, this user's service indicator being usable between the service provider domain and the network operator (IDP) domain to unambiguously identify the user at each respective domain, the Identity Generator device comprising:

   - means for obtaining a master user's identifier (UID) usable to identify the user at the operator's network where user data for the user are accessible in a user directory system (4);
   - means for obtaining a service identifier (SID), indicative of services to be accessed at the service provider (1; 2; 3; SP-1; SP-2; SP-N);
   - means (F) for constructing a user's service indicator (USI) that includes the master user's identifier (UID) and the service identifier (SID); and

   the Identity Generator device **characterized by** comprising:

   - a Decomposer component (7) having means for carrying out a reverse generation (F$^{-1}$) to ob-

tain a master user's identifier (UID) from a received user's service indicator (USI);
- means for making use of the master user's identifier obtained by the reverse generation as a search key to perform a lookup for the user in the user directory system (4), thus verifying the validity of the received user's service indicator (USI).

2. The Identity Generator device of claim 1, wherein the service identifier (SID), indicative of services to be accessed at the service provider, comprises at least one element selected from: a service provider indicator (SPI), and a number of service indicators (S1I; SMI).

3. The Identity Generator device of claim 1, further comprising:

- means for obtaining at least one element selected from: network operator identifier (OID), auxiliary value (Salt), expiry time, and integrity code; and
- means for including the at least one element into the user's service indicator (USI).

4. The Identity Generator device of claim 1, wherein the master user's identifier (UID) is built up as function (SHA-1) of a real user identity (MSISDN).

5. The Identity Generator device of claim 1, further comprising means for carrying out a symmetric cipher of the user's service indicator (USI) using a ciphering key ($K_E$).

6. The Identity Generator device of claim 5, wherein the ciphering key ($K_E$) is unique for all the applicable service providers (1; 2; 3).

7. The Identity Generator device of claim 5, wherein the ciphering key ($K_E$) is different per each service provider (1; 2; 3).

8. The Identity Generator device of claim 1, wherein the means for carrying out a reverse generation ($F^{-1}$) in the Decomposer component (7) includes means for obtaining the service identifier (SID) used to generate the given user's service indicator (USI).

9. The Identity Generator device of claim 1, wherein the means for carrying out a reverse generation ($F^{-1}$) in the Decomposer component (7) may further include means for obtaining at least one element selected from: network operator identifier (OID), and ciphering key ($K_E$) used to generate the given user's service indicator (USI).

10. The Identity Generator device of claim 1, wherein the means for carrying out a reverse generation ($F^{-1}$) in the Decomposer component may further include:

- means for obtaining applicable expiry time criteria; and
- means for verifying the validity of a given temporary user's service indicator (T-USI) against said expiry time criteria.

11. A method for generating at an Identity Generator device (6) of a network operator (IDP) a user's service indicator (USI) intended for a user (5) to access a number of services offered by a service provider through a network operator, this user's service indicator being usable between the service provider domain and the network operator (IDP) domain to unambiguously identify the user at each respective domain, the method comprising:

- a step of obtaining a master user's identifier (UID) usable to identify the user (5) at the operator's network where user data for the user are accessible in a user directory system (4);
- a step of obtaining a service identifier (SID), indicative of services to be accessed at the service provider (1; 2; 3; SP-1; SP-2; SP-N);
- a step of constructing a user's service indicator that includes the master user's identifier and the service identifier; and
- a step of carrying out a reverse generation ($F^{-1}$) to obtain the master user's identifier (UID) from a received user's service indicator (USI);

the method **characterized by** comprising:

- a step of making use of the master user's identifier obtained by the reverse generation as a search key to perform a lookup for the user in the user directory system (4), thus verifying the validity of the received user's service indicator (USI).

12. The method of claim 11, wherein the step of obtaining a service identifier (SID) includes a step of obtaining at least one element selected from: a service provider indicator (SPI), and a number of service indicators (S1I; SMI).

13. The method of claim 11, further comprising:

- a step of obtaining at least one element selected from: network operator identifier (OID), auxiliary value (Salt), expiry time, and integrity code; and
- a step of including the at least one element into the user's service indicator (USI).

14. The method of claim 11, wherein the step of obtaining a master user's identifier includes a step of applying a function (SHA-1) to a real user identity (MSISDN).

15. The method of claim 11, further comprising a step of carrying out a symmetric cipher of the user's service indicator using a ciphering key ($K_E$).

16. The method of claim 15, wherein the ciphering key ($K_E$) is unique for all the applicable service providers.

17. The method of claim 15, wherein the ciphering key ($K_E$) is different per each service provider.

18. The method of claim 17, further comprising a step of determining a service provider issuing a communication based on a given user's service indicator.

19. A use of the Identity Generator device (6) of claim 1, the device being integrated in an entity of an operator's network (IDP) where the user data are accessible.

20. The use of claim 19, wherein the entity is a Central Provisioning Entity responsible for provisioning tasks in the operator's network.

21. The use of claim 19, wherein the entity is a User Directory System (4) storing user data.

22. The use of claim 19, wherein the entity is a Border Gateway placed at the border of the operator's network.

23. The use of claim 22, wherein the Border Gateway is an entity selected from: an HTTP Proxy, a WAP Gateway, and a Messaging Gateway.

**Patentansprüche**

1. Identitätsgeneratoreinrichtung (6), dazu angeordnet, eine Teilnehmerdienstkennung (USI) zu generieren, damit ein Teilnehmer auf eine Anzahl von Diensten zugreifen kann, die ein Dienstprovider durch einen Netzbetreiber anbietet, wobei diese Teilnehmerdienstkennung zwischen der Dienstproviderdomäne und der Domäne des Netzbetreibers (IDP) verwendbar ist, um den Teilnehmer bei jeder jeweiligen Domäne eindeutig zu identifizieren, wobei die Identitätsgeneratoreinrichtung Folgendes umfasst:

- Mittel zum Erhalten einer Master-Teilnehmerkennung (UID), die verwendbar ist, um den Teilnehmer beim Betreibernetz zu identifizieren, wo Teilnehmerdaten für den Teilnehmer in einem Teilnehmerverzeichnissystem (4) zugreifbar sind;

- Mittel zum Erhalten einer Dienstkennung (SID), die Dienste anzeigt, auf die beim Dienstprovider (1, 2; 3; SP-1; SP-2; SP-N) zugegriffen werden soll;
- Mittel (F) zum Konstruieren einer Teilnehmerdienstkennung (USI), die die Master-Teilnehmerkennung (UID) und die Dienstkennung (SID) enthält; und

die Identitätsgeneratoreinrichtung, **dadurch gekennzeichnet, dass** sie Folgendes umfasst:

- eine Zerlegerkomponente (7) mit Mitteln zum Ausführen einer inversen Generation ($F^{-1}$), um eine Master-Teilnehmerkennung (UID) aus einer empfangenen Teilnehmerdienstkennung (USI) zu erhalten;
- Mittel zum Nutzen der durch die inverse Generation erhaltenen Master-Teilnehmerkennung als einen Suchschlüssel, um den Teilnehmer im Teilnehmerverzeichnissystem (4) zu suchen und auf diese Weise die Gültigkeit der empfangenen Teilnehmerdienstkennung (USI) zu verifizieren.

2. Identitätsgeneratoreinrichtung nach Anspruch 1, worin die Dienstkennung (SID), die Dienste anzeigt, auf die beim Dienstprovider zugegriffen werden soll, mindestens ein Element umfasst, das aus Folgenden ausgewählt ist: einer Dienstproviderkennung (SPI) und einer Anzahl von Dienstkennungen (S1I; SMI).

3. Identitätsgeneratoreinrichtung nach Anspruch 1, außerdem umfassend:

- Mittel zum Erhalten von mindestens einem aus den Folgenden ausgewählten Element: Netzbetreiberkennung (OID), Hilfswert (Salt), Ablaufzeit und Integritätscode; und
- Mittel zum Einschließen des mindestens einen Elements in die Teilnehmerdienstkennung (USI).

4. Identitätsgeneratoreinrichtung nach Anspruch 1, worin die Master-Teilnehmerkennung (UID) als Funktion (SHA-1) einer realen Teilnehmerkennung (MSISDN) aufgebaut wird.

5. Identitätsgeneratoreinrichtung nach Anspruch 1, außerdem Mittel zum Ausführen einer symmetrischen Chiffre der Teilnehmerdienstkennung (USI) unter Verwendung eines Chiffreschlüssels ($K_E$) umfassend.

6. Identitätsgeneratoreinrichtung nach Anspruch 5, worin der Chiffreschlüssel ($K_E$) für alle anwendbaren Dienstprovider (1; 2; 3) eindeutig ist.

7. Identitätsgeneratoreinrichtung nach Anspruch 5, worin der Chiffreschlüssel ($K_E$) für jeden Dienstprovider (1; 2; 3) verschieden ist.

8. Identitätsgeneratoreinrichtung nach Anspruch 1, worin das Mittel zum Ausführen einer inversen Generation ($F^{-1}$) in der Zerlegerkomponente (7) Mittel enthält, um die Dienstkennung (SID) zu erhalten, die zum Generieren der gegebenen Teilnehmerdienstkennung (USI) verwendet wurde.

9. Identitätsgeneratoreinrichtung nach Anspruch 1, worin das Mittel zum Ausführen einer inversen Generation ($F^{-1}$) in der Zerlegerkomponente (7) außerdem ein Mittel enthalten kann, um mindestens ein aus den Folgenden ausgewähltes Element zu erhalten: Netzbetreiberkennung (OID) und Chiffreschlüssel ($K_E$), der zum Generieren der gegebenen Teilnehmerdienstkennung (USI) verwendet wurde.

10. Identitätsgeneratoreinrichtung nach Anspruch 1, worin das Mittel zum Ausführen einer inversen Generation ($F^{-1}$) in der Zerlegerkomponente außerdem enthalten kann:

    - Mittel zum Erhalten von anwendbaren Ablaufzeitkriterien; und
    - Mittel zum Verifizieren der Gültigkeit einer gegebenen temporären Teilnehmerdienstkennung (T-USI) mittels der Ablaufzeitkriterien.

11. Verfahren, um an einer Identitätsgeneratoreinrichtung (6) eines Netzbetreibers (IDP) eine Teilnehmerdienstkennung (USI) zu generieren, die dazu vorgesehen ist, dass ein Teilnehmer (5) auf eine Anzahl von Diensten zugreift, die ein Dienstprovider durch einen Netzbetreiber anbietet, wobei diese Teilnehmerdienstkennung zwischen der Dienstproviderdomäne und der Domäne des Netzbetreibers (IDP) verwendbar ist, um den Teilnehmer bei jeder jeweiligen Domäne eindeutig zu identifizieren, wobei das Verfahren Folgendes umfasst:

    - einen Schritt des Erhaltens einer Master-Teilnehmerkennung (UID), die verwendbar ist, um den Teilnehmer (5) beim Betreibernetz zu identifizieren, wo Teilnehmerdaten für den Teilnehmer in einem Teilnehmerverzeichnissystem (4) zugreifbar sind;
    - einen Schritt des Erhaltens einer Dienstkennung (SID), die Dienste anzeigt, auf die beim Dienstprovider (1; 2; 3; SP-1; SP-2; SP-N) zugegriffen werden soll;
    - einen Schritt des Konstruierens einer Teilnehmerdienstkennung, die die Master-Teilnehmerkennung und die Dienstkennung enthält; und
    - einen Schritt des Ausführens einer inversen Generation ($F^{-1}$), um die Master-Teilnehmer-

kennung (UID) aus einer empfangenen Teilnehmerdienstkennung (USI) zu erhalten;

wobei das Verfahren **dadurch gekennzeichnet ist, dass** es Folgendes umfasst:

    - einen Schritt der Nutzung der durch die inverse Generation erhaltenen Master-Teilnehmerkennung als einen Suchschlüssel, um den Teilnehmer im Teilnehmerverzeichnissystem (4) zu suchen und auf diese Weise die Gültigkeit der empfangenen Teilnehmerdienstkennung (USI) zu verifizieren.

12. Verfahren nach Anspruch 11, worin der Schritt des Erhaltens einer Dienstkennung (SID) einen Schritt enthält, mindestens ein Element zu erhalten, das aus Folgenden ausgewählt ist: einer Dienstproviderkennung (SPI) und einer Anzahl von Dienstkennungen (S1I; SMI).

13. Verfahren nach Anspruch 11, außerdem umfassend:

    - einen Schritt des Erhaltens von mindestens einem aus den Folgenden ausgewählten Element: Netzbetreiberkennung (OID), Hilfswert (Salt), Ablaufzeit und Integritätscode; und
    - einen Schritt des Einschließens des mindestens einen Elements in die Teilnehmerdienstkennung (USI).

14. Verfahren nach Anspruch 11, worin der Schritt des Erhaltens einer Master-Teilnehmerkennung einen Schritt des Anwendens einer Funktion (SHA-1) auf eine reale Teilnehmerkennung (MSISDN) enthält.

15. Verfahren nach Anspruch 11, außerdem einen Schritt des Ausführens einer symmetrischen Chiffre der Teilnehmerdienstkennung unter Verwendung eines Chiffreschlüssels ($K_E$) umfassend.

16. Verfahren nach Anspruch 15, worin der Chiffreschlüssel ($K_E$) für alle anwendbaren Dienstprovider eindeutig ist.

17. Verfahren nach Anspruch 15, worin der Chiffreschlüssel ($K_E$) für jeden Dienstprovider verschieden ist.

18. Verfahren nach Anspruch 17, außerdem einen Schritt des Bestimmens umfassend, dass ein Dienstprovider auf der Basis einer gegebenen Teilnehmerdienstkennung eine Kommunikation ausgibt.

19. Verwendung der Identitätsgeneratoreinrichtung (6) nach Anspruch 1, wobei die Einrichtung in eine Entität eines Betreibernetzes (IDP) integriert ist, wo die Teilnehmerdaten zugreifbar sind.

**20.** Verwendung nach Anspruch 19, worin die Entität eine Central Provisioning Entity ist, die für Provisionierungsaufgaben im Betreibernetz verantwortlich ist.

**21.** Verwendung nach Anspruch 19, worin die Entität ein Teilnehmerverzeichnissystem (4) ist, das Teilnehmerdaten speichert.

**22.** Verwendung nach Anspruch 19, worin die Entität ein Border-Gateway ist, das an der Grenze des Betreibernetzes platziert ist.

**23.** Verwendung nach Anspruch 22, worin das Border-Gateway eine aus den Folgenden ausgewählte Entität ist: ein HTTP-Proxy, ein WAP-Gateway und ein Messaging-Gateway.

**Revendications**

**1.** Dispositif de génération d'identité (6) agencé de manière à générer un indicateur de service d'un utilisateur (USI), permettant à un utilisateur d'accéder à un nombre de services proposés par un fournisseur de services via un opérateur de réseau, ledit indicateur de service d'un utilisateur étant utilisable entre le domaine de fournisseur de services et le domaine d'opérateur de réseau (IDP) de manière à identifier sans ambiguïté l'utilisateur au niveau de chaque domaine respectif, le dispositif de génération d'identité comportant:

  - un moyen destiné à obtenir un identifiant d'utilisateur maître (UID) utilisable de manière à identifier l'utilisateur au niveau du réseau de l'opérateur où des données d'utilisateur destinées à l'utilisateur sont accessibles dans un système de répertoire d'utilisateurs (4);
  - un moyen destiné à obtenir un identifiant de service (SID), représentant des services auxquels il doit être accédé au niveau du fournisseur de services (1; 2; 3; SP-1; SP-2; SP-N);
  - un moyen (F) pour construire un indicateur de service d'un utilisateur (USI) lequel indicateur comporte l'identifiant d'utilisateur maître (UID) et l'identifiant de service (SID); et

le dispositif de génération d'identité est **caractérisé en ce qu'**il comporte:

  - un composant de décomposeur (7) présentant un moyen destiné à mettre en oeuvre une génération inversée ($F^{-1}$) pour obtenir un identifiant d'utilisateur maître (UID) à partir d'un indicateur de service reçu d'un utilisateur (USI);
  - un moyen destiné à faire usage de l'identifiant d'utilisateur maître obtenu par le biais de la génération inversée en qualité de clé de recherche pour mettre en oeuvre une consultation pour l'utilisateur dans le système de répertoire d'utilisateurs (4), ce qui permet de vérifier par conséquent la validité de l'indicateur de service reçu d'un utilisateur (USI).

**2.** Dispositif de génération d'identité selon la revendication 1, dans lequel l'identifiant de service (SID), représentant des services auxquels il doit être accédé au niveau du fournisseur de services, comporte au moins un élément sélectionné dans le groupe comportant: un indicateur de fournisseur de services (SPI), et un nombre d'indicateurs de service (S1I; SMI).

**3.** Dispositif de génération d'identité selon la revendication 1, comportant en outre:

  - un moyen destiné à obtenir au moins un élément sélectionné dans le groupe comportant: un identifiant d'opérateur de réseau (OID), une valeur auxiliaire (Salt), un temps d'expiration, et un code d'intégrité; et
  - un moyen destiné à inclure le au moins un élément dans l'indicateur de service d'un utilisateur (USI).

**4.** Dispositif de génération d'identité selon la revendication 1, dans lequel l'identifiant d'utilisateur maître (UID) est conçu sous la forme d'une fonction (SHA-1) d'une identité d'utilisateur réelle (MSISDN).

**5.** Dispositif de génération d'identité selon la revendication 1, comportant en outre un moyen destiné à mettre en oeuvre un chiffrement symétrique de l'indicateur de service d'un utilisateur (USI) en faisant appel à une clé de chiffrement ($K_E$).

**6.** Dispositif de génération d'identité selon la revendication 5, dans lequel la clé de chiffrement ($K_E$) est unique pour l'ensemble des fournisseurs de services pertinents (1; 2; 3).

**7.** Dispositif de génération d'identité selon la revendication 5, dans lequel la clé de chiffrement ($K_E$) est différente pour chaque fournisseur de services (1; 2; 3).

**8.** Dispositif de génération d'identité selon la revendication 1, dans lequel le moyen destiné à mettre en oeuvre une génération inversée ($F^{-1}$) dans le composant de décomposeur (7) comporte un moyen destiné à obtenir l'identifiant de service (SID) utilisé pour générer l'indicateur de service d'un utilisateur donné (USI).

**9.** Dispositif de génération d'identité selon la revendication 1, dans lequel le moyen destiné à mettre en oeuvre une génération inversée ($F^{-1}$) dans le composant de décomposeur (7) peut en outre inclure un moyen destiné à obtenir au moins un élément sélectionné dans le groupe comportant: un identifiant d'opérateur de réseau (OID), et une clé de chiffrement ($K_E$) utilisée pour générer l'indicateur de service d'un utilisateur donné (USI).

**10.** Dispositif de génération d'identité selon la revendication 1, dans lequel le moyen destiné à mettre en oeuvre une génération inversée ($F^{-1}$) dans le composant de décomposeur peut en outre inclure:

- un moyen destiné à obtenir des critères de temps d'expiration applicables; et
- un moyen destiné à vérifier la validité d'un indicateur de service donné temporaire d'un utilisateur (T-USI) en le comparant auxdits critères de temps d'expiration.

**11.** Procédé destiné à générer, au niveau d'un dispositif de génération d'identité (6) d'un opérateur de réseau (IDP), un indicateur de service d'un utilisateur (USI) permettant à un utilisateur (5) d'accéder à un nombre de services proposés par un fournisseur de services via un opérateur de réseau, ledit indicateur de service d'un utilisateur étant utilisable entre le domaine de fournisseur de services et le domaine d'opérateur de réseau (IDP) de manière à identifier sans ambiguïté l'utilisateur au niveau de chaque domaine respectif, le procédé comportant:

- une étape consistant à obtenir un identifiant d'utilisateur maître (UID) utilisable de manière à identifier l'utilisateur (5) au niveau du réseau de l'opérateur où des données d'utilisateur destinées à l'utilisateur sont accessibles dans un système de répertoire d'utilisateurs (4);
- une étape consistant à obtenir un identifiant de service (SID), représentant des services auxquels il doit être accédé au niveau du fournisseur de services (1; 2; 3; SP-1; SP-2; SP-N);
- une étape consistant à construire un indicateur de service d'un utilisateur lequel indicateur comporte l'identifiant d'utilisateur maître et l'identifiant de service; et
- une étape consistant à mettre en oeuvre une génération inversée ($F^{-1}$) pour obtenir l'identifiant d'utilisateur maître (UID) à partir d'un indicateur de service reçu d'un utilisateur (USI);

le procédé étant **caractérisé en ce qu'**il comporte:

- une étape consistant à faire usage de l'identifiant d'utilisateur maître, obtenu par le biais de la génération inversée, en qualité de clé de recherche pour mettre en oeuvre une consultation pour l'utilisateur dans le système de répertoire d'utilisateurs (4), ce qui permet de vérifier par conséquent la validité de l'indicateur de service reçu d'un utilisateur (USI).

**12.** Procédé selon la revendication 11, dans lequel l'étape consistant à obtenir un identifiant de service (SID) comporte une étape consistant à obtenir au moins un élément sélectionné dans le groupe comportant: un indicateur de fournisseur de services (SPI), et un nombre d'indicateurs de service (S1I; SMI).

**13.** Procédé selon la revendication 11, comportant en outre:

- une étape consistant à obtenir au moins un élément sélectionné dans le groupe comportant: un identifiant d'opérateur de réseau (OID), une valeur auxiliaire (Salt), un temps d'expiration, et un code d'intégrité; et
- une étape consistant à inclure le au moins un élément dans l'indicateur de service d'un utilisateur (USI).

**14.** Procédé selon la revendication 11, dans lequel l'étape consistant à obtenir un identifiant d'utilisateur maître comporte une étape consistant à appliquer une fonction (SHA-1) à une identité d'utilisateur réelle (MSISDN).

**15.** Procédé selon la revendication 11, comportant en outre une étape consistant à mettre en oeuvre un chiffrement symétrique de l'indicateur de service d'un utilisateur en faisant appel à une clé de chiffrement ($K_E$).

**16.** Procédé selon la revendication 15, dans lequel la clé de chiffrement ($K_E$) est unique pour l'ensemble des fournisseurs de services pertinents.

**17.** Procédé selon la revendication 15, dans lequel la clé de chiffrement ($K_E$) est différente pour chaque fournisseur de services.

**18.** Procédé selon la revendication 17, comportant en outre une étape consistant à déterminer un fournisseur de services émettant une communication sur la base d'un indicateur de service d'un utilisateur donné.

**19.** Utilisation du dispositif de génération d'identité (6) selon la revendication 1, le dispositif étant intégré dans une entité du réseau d'un opérateur (IDP) où les données d'utilisateur sont accessibles.

**20.** Utilisation selon la revendication 19, dans laquelle l'entité est une entité centrale de dimensionnement responsable du dimensionnement des tâches dans le réseau de l'opérateur.

**21.** Utilisation selon la revendication 19, dans laquelle l'entité est un système de répertoire d'utilisateurs (4) stockant des données d'utilisateur.

**22.** Utilisation selon la revendication 19, dans laquelle l'entité est une passerelle d'extrémité placée à la frontière du réseau de l'opérateur.

**23.** Utilisation selon la revendication 22, dans laquelle la passerelle d'extrémité est une entité sélectionné parmi: un serveur mandataire HTTP, une passerelle WAP, et une passerelle de messagerie.

Identity Provider (IDP) Domain

User Directory System

4

N+1 keys:
Joe.Doe@idp
xc&45m?n
0902wqel
12Joe78@FG

Alias-1:
xc&45m?n

Alias-2:
0902wqel

Alias-N:
12Joe78@FG

Service Provider (SP-1) Domain

SP-1
1

Service Provider (SP-2) Domain

SP-2
2

Service Provider (SP-N) Domain

SP-N
3

JoeDoe@sp1

J.Doe@sp2

JoDo12@spN

5

User
Joe Doe

FIG. -1-
Related Art

FIG. -2-

FIG.-3A-

FIG.-3B-

EP 1 668 859 B1

| Service Provider Indicator (SPI) | Service-1 Indicator (S1I) | . . . | Service-M Indicator (SMI) |
|---|---|---|---|

$K_H$

| Master User's Identifier (UID) | Service Identifier (SID) | Operator Identifier (OID) | Salt |
|---|---|---|---|

HMAC Computing → Integrity Code

$K_E$

| Master User's Identifier (UID) | Service Identifier (SID) | Operator Identifier (OID) | Salt | Integrity Code |
|---|---|---|---|---|

Encryption

| User's Service Indicator (USI) |
|---|

**FIG.-4-**

EP 1 668 859 B1

Calculation of
Expiry Time

$K_H$

| Master User's Identifier (UID) | Service Identifier (SID) | Operator Identifier (OID) | Expiry Time | Salt |
|---|---|---|---|---|

HMAC Computing

Integrity Code

| Master User's Identifier (UID) | Service Identifier (SID) | Operator Identifier (OID) | Expiry Time | Salt | Integrity Code |
|---|---|---|---|---|---|

$K_E$

Encryption

| Temporary User's Service Indicator (T-USI) |
|---|

FIG.-5-

**EP 1 668 859 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03050743 A
- US 20030093681 A